# EUROPÄISCHE PATENTANMELDUNG

(11) **EP 1 232 821 A1**
(43) Veröffentlichungstag der Anmeldung: **21.08.2002**
(21) Anmeldenummer: 02003309.8
(22) Anmeldetag: 13.02.2002
(51) Int. Cl.: B23D 79/02

(54) **Vorrichtung zum thermischen Entgraten von Werkstücken**

(30) Priorität: 15.02.2001 DE 10106966
(71) Anmelder: ROBERT BOSCH GMBH, 70442 Stuttgart (DE)
(72) Erfinder: Conrad, Hans-Jürgen, 71277 Rutesheim (DE); Kaercher, Jochen, 70378 Stuttgart (DE)

(57) **Zusammenfassung**

Die Erfindung betrifft eine Vorrichtung zum thermischen Entgraten von Werkstücken mit einer verschließbaren Entgratungskammer (1), in welche die zu entgratenden Werkstücke (3) einbringbar sind und die mit einer Prozessgasquelle verbindbar und mit einer Zündeinrichtung (17, 18) zum Zünden einer eingebrachten Prozessgasfüllung versehen ist, wobei das Prozessgas aus mehreren Komponenten besteht, die in einem Mischblock (11) zusammengeführt werden. Um die bei herkömmlichen Vorrichtungen vorhandenen Mängel zu beseitigen, ist erfindungsgemäß vorgesehen, dass in dem Mischblock (11) oder im Bereich der Entgratungskammer (1) ein Zentralventil (24) angeordnet ist, das die Zufuhr des Prozessgases zur Entgratungskammer (1) sperrt bzw. freigibt.

## Beschreibung

### Stand der Technik

Die Erfindung geht aus von einer Vorrichtung zum thermischen Entgraten von Werkstücken nach der Gattung des Patentanspruchs 1.

Bei Anlagen zum thermischen Entgraten von Werkstücken erfolgt ein ungezielter Abtrag, bei dem das gesamte Werkstück einem Hitzeschock ausgesetzt wird. Bevorzugt abgetragen werden Ecken und Kanten, da diese Stellen bei großer Oberfläche und kleinem Volumen besonders viel Wärme aufnehmen und somit oxidiert bzw. verbrannt werden. Der Hitzeschäck wird durch das Abbrennen eines Prozessgases, das vorzugsweise aus einem Brenngas-Sauerstoffgemisch besteht, erzeugt, wobei Wasserstoff oder Erdgas bzw. Methan als Brenngas verwendet werden.

Die verschiedenen Komponenten des Prozessgases werden aus Vorratsbehältern über Zuführleitungen zu einem Mischblock geführt, in dem die Komponenten zusammengeführt werden. In jeder Zuführleitung ist ein Ventil vorgesehen, welches die Zuführleitung sperren bzw. freigeben kann. Von der Vermischungsstelle im Mischbloch wird das Prozessgas über eine zentrale Gaszuführung zur Entgratungskammer geführt. Die Gasvorlage mit reinem Sauerstoff (O₂) und reinem Brenngas bildet von der Vermischungsstelle bis zum Ventilsitz einen Temperaturschutz. Die Dichtsitze bestehen üblicherweise aus einer Bronze-Buchse und einer Kugel. Die Kugel ist an einem Ventilstößel befestigt und wird von einem Hydraulikzylinder gegen die Buchse gepresst, so dass in geschlossenem Zustand eine rein metallische Abdichtung besteht.

Diese bekannte Ausgestaltung hat diverse Mängel. Wegen der hohen Temperaturen und Drücke muss die Gasvorlage relativ lang ausgebildet werden, damit sich die hohen Temperaturen über die Länge der Gaszuführung abbauen können und die Ventile nicht mehr als unbedingt nötig belasten. Dies verursacht wegen der langen Gaszuführung ein großes Totvolumen und hohe Herstellungskosten für den Mischbock. Da trotz Gasvorlage die Ventile in den Zuführleitungen mit relativ hohen Temperaturen und Drücken beaufschlagt sind, müssen diese Ventile nicht nur entsprechend ausgebildet sein, sie unterliegen auch einem relativ hohen Verschleiß und müssen deshalb oft ausgetauscht werden. Dies führt zu einem hohen Wartungsaufwand und zu hohen Kosten.

### Vorteile der Erfindung

Die erfindungsgemäße Vorrichtung mit den Merkmalen des Patentanspruchs 1 erbringt demgegenüber zunächst den Vorteil, dass der Anteil der Bauteile, die einem hohen Druck ausgesetzt sind, erheblich reduziert werden kann, da die bei der Zündung und anschließenden Verbrennung des Prozessgases entstehenden hohen Temperaturen und Drücke von dem Zentralventil aufgenommen werden, so dass die dahinter liegenden Ventile und Armaturen geschützt sind. Dies führt dazu, dass für die einzelnen Ventile des aus mehreren Komponenten bestehenden Prozessgases handelsübliche Ventile verwendet werden können, da diese nicht den hohen Anforderungen wie beim Stand der Technik zu entsprechen brauchen. Außerdem kann die Gasvorlage relativ kurz ausgeführt werden, da das Zentralventil keine hohen Temperaturen durchlässt, so dass eine lange Gasvorlage zum Schutz der Ventile für die Komponenten des Prozessgases nicht mehr erforderlich ist. Dadurch können nicht nur die Herstellungskosten gesenkt werden, sondern es fallen auch weniger Verschleißteile an, so dass die Unterhaltskosten zurückgehen.

Durch die in den Unteransprüchen aufgeführten Maßnahmen sind vorteilhafte Weiterbildungen und Verbesserungen der im Hauptanspruch angegebenen Vorrichtung möglich.

Das Zentralventil ist vorzugsweise über einen Hydraulikzylinder ansteuerbar. Dadurch ist ein zuverlässiges Sperren der zentralen Gaszuführung gewährleistet.

Das Zentralventil umfasst nach einer bevorzugten Weiterbildung vorzugsweise einen Ventilstößel, der auf einen Ventilsitz gepresst wird, der einen aus einem elastischen Material, z. B. Teflon, oder'einem plastischen Material bestehenden Dichtring aufweist. Dadurch kann eine gute Standzeit des Zentralventils sichergestellt werden.

Je nach Ausgestaltungsvariante kann der Ventilsitz ebene oder auch schräge Kontaktflächen und der Ventilstößel entsprechende Kontaktflächen aufweisen. Dies hängt von den jeweiligen Gegebenheiten ab.

Damit auch bei hohen Anpressdrücken eine Verdrängerfunktion ausgeübt und eine Spaltextrusion verhindert wird, ist vorzugsweise vorgesehen, dass der Dichtring wenigstens auf der vom Ventilstößel beaufschlagten Seite radial innen und außen von geschlossenen, umlaufenden, metallischen Dichtringteilen eingefasst ist.

Diese Dichtringteile erstrecken sich vorzugsweise nur über einen Teil der Dichtririghöhe, um ein Verklemmen dieser Dichtringteile in ihren Aufnahmen zu vermeiden.

Nach einer bevorzugten Ausführungsform kann der Ventilstößel pilzförmig ausgebildet sein. Dies hat den Vorteil, dass durch den in der zentralen Gaszuführung herrschenden Überdruck der Pilz noch stärker auf den Ventilsitz gepresst wird, so dass eine geringere Ausgangszuhaltekraft notwendig ist.

Nach einer bevorzugten Ausgestaltung weist der Ventilstößel einen mittig angeordneten zylindrischen Zapfen auf, der vorzugsweise nach vorne abgerundet ist. Diese Zapfen dient als Hitzeschild und schützt den Ventilsitz von zu hohen Temperaturen.

Wenn nach einer bevorzugten Weiterbildung der Mischblock direkt an der Entgratungskammer angeordnet ist, kann auf komplizierte und lange Zuleitungen verzichtet werden. Auch hierdurch lassen sich Kosten einsparen und ein kompakterer Aufbau der gesamten Vorrichtung erreichen.

### Zeichnung

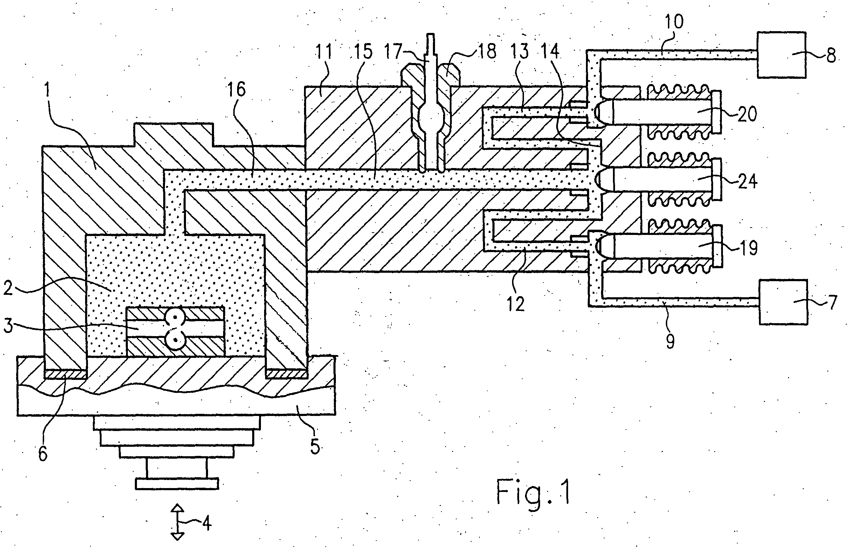

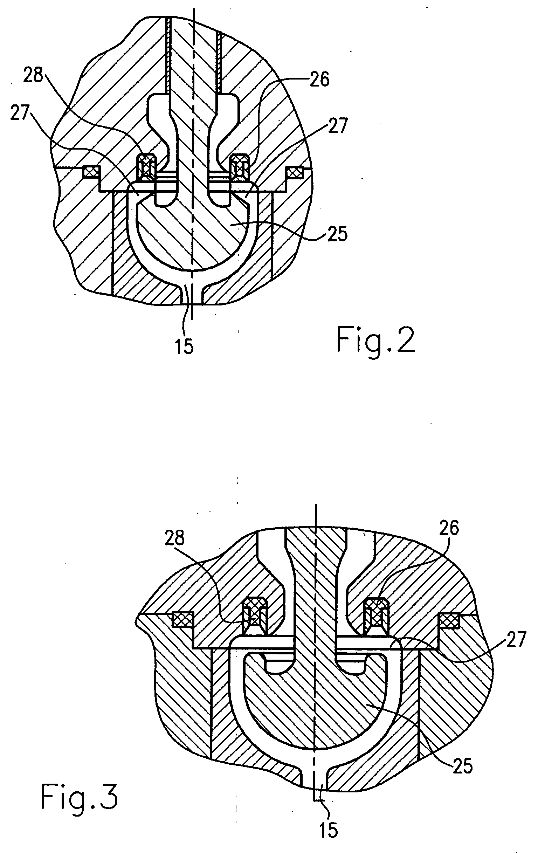

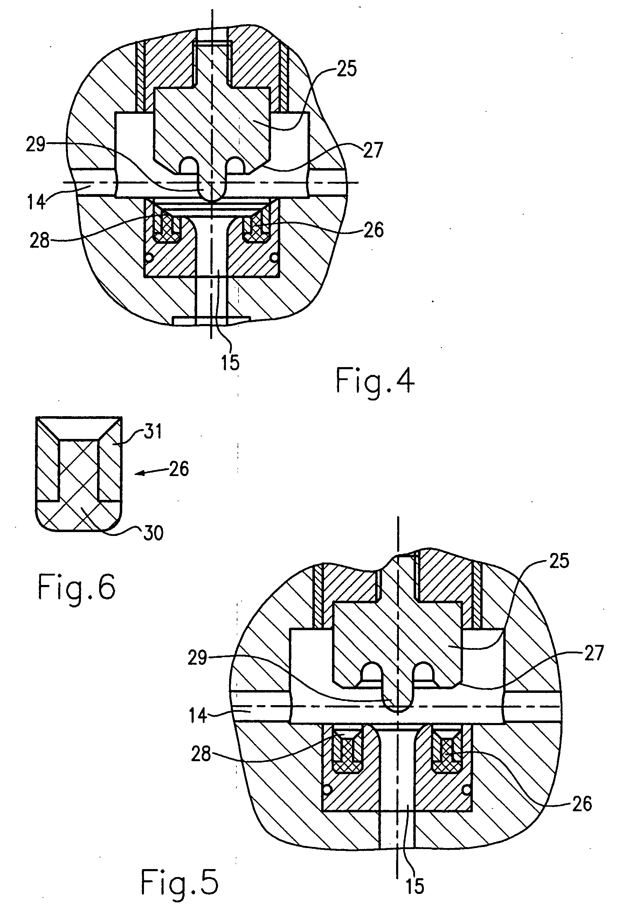

Ein Ausführungsbeispiel der Erfindung ist in den Zeichnungen dargestellt und in der nachfolgenden Beschreibung unter Angabe weiterer Vorteile und Merkmale näher erläutert. Die Figur 1 zeigt eine schematisch dargestellte Vorrichtung zum thermischen Entgraten von Werkstücken mit den zum Verständnis der Erfindung notwendigen Bauelementen. Die Figuren 2 bis 5 zeigen in vergrößerter Darstellung unterschiedliche Ausführungsvarianten des Ventils, das bei der Vorrichtung nach Figur 1 Verwendung finden kann, und in Figur 6 ist in einer vergrößerten Ansicht die Ausgestaltung eines Ventilsitzes dargestellt.

### Beschreibung des Ausführungsbeispiels

In der Figur 1 ist mit 1 eine Entgratungskammer bezeichnet, in deren Brennraum 2 sich ein zu entgratendes Werkstück 3 befindet. Das Werkstück 3 ruht auf einem in Richtung des Doppelpfeils 4 bewegbaren Schließteller 5, welcher vor dem Füllen des Brennraums 2 mit einem Brenngas-Sauerstoffgemisch und Zünden desselben an die Stirnfläche der Entgratungskammer 1 angepresst wird. Zwischen dem Schließteller 5 und der Stirnfläche der Entgratungskammer 1 ist eine Dichtung 6 angeordnet.

Die Gaskomponenten des Brenngas-Sauerstoffgemisches werden aus je einem Vorratsbehälter 7 für Brenngas bzw. 8 für Sauerstoff über druckfeste Gaszuführleitungen 9 bzw. 10 in einen Mischblock 11 eingebracht. Dieser besteht aus einem massiven Metallblock, in dem Gaszuführungsbohrungen 12, 13, eine Mischraumbohrung 14 und eine zentrale Gaszuführung 15 ausgebildet sind. Durch die zentrale Gaszuführung 15 und eine weitere, in der Entgratungskammer 1 ausgebildete Bohrung 16 strömt das Gasgemisch in den Brennraum 2 der Entgratungskammer 1. Zum Zünden des Gasgemisches dient eine in die zentrale Gaszuführung 15 hineinragende Zündkerze 17, die in einem Einsatz 18 des Mischblocks 11 sitzt. Zwischen den Gaszuführleitungen 9, 10 und den Gaszuführungsbohrungen 12, 13 ist im Mischblock 11 je ein Ventil 19 bzw. 20 angeordnet. Diese Ventile 19 bzw. 20 werden bei Beginn des Gaseinlasses durch Federkraft geöffnet und nach Abschluss des Gaseinlasses wieder geschlossen. Das Schließen der Ventile 19, 20 gegen Federwirkung erfolgt vorzugsweise durch Hydraulikkraft.

Die Gaszuführleitungen 9 und 10 für Brenngas und Sauerstoff können, ausgehend von den Vorratsbehältern 7 und 8, diverse nicht dargestellte Armaturen, wie Abstellventile, Druckreduzierventile, Dosierventile, Durchflussmengenmesser und Absperrventile enthalten.

Die erfindungsgemäße Vorrichtung zum Entgraten von Werkstücken ist mit einem Zentralventil 24 versehen. Dieses ist so angeordnet, dass es die zentrale Gaszuführung 15 gegenüber der Mischraumbohrung 14 abschließt.

Anders als in der Figur 1 dargestellt, kann das Zentralventil 24 auch entlang der zentralen Gaszuführung 15, z. B. zwischen der Zündkerze 17 und der Mischraumbohrung 14, vor der Zündkerze 17 oder im Bereich der Bohrung 16 angeordnet sein.

Die Arbeitsweise des Zentralventils 24 ist wie folgt: Zum Füllen der Entgratungskammer 1 sind das Zentralventil 24 sowie die Ventile 19 und 20 für Brenhgas und Sauerstoff geöffnet. Wenn die Entgratungskammer 1 mit dem Prozessgas gefüllt ist, werden das Zentralventil 24 und die Ventile 19 und 20 geschlossen. Bei der Zündung und der anschließenden Verbrennung werden die hohen Temperaturen und Drücke ausschließlich von dem Zentralventil 24 aufgenommen, während die Ventile 19 und 20 lediglich zum Sperren bzw. Freigeben der Gaszuführleitungen 9 und 10 dienen.

Die zur Steuerung der verschiedenen Ventile 19, 20 und 24 erforderlichen Hydraulikzylinder, Verbindungen, Armaturen und Anschlüsse sind der Übersichtlichkeit halber nicht dargestellt.

In den Figuren 2 bis 5 sind verschiedene Formen und Ausführungsvarianten für das Zentralventil 24 dargestellt.

Die Figur 2 zeigt einen pilzförmigen Ventilstößel 25 und einen zugehörigen Ventilsitz 26. Der Ventilstößel 25 hat abgeschrägte Kontaktflächen 27, die mit entsprechenden Kontaktflächen 28 am Ventilsitz 26 zusammenwirken. Bei dem in Figur 2 dargestellten Ausführungsbeispiel sind die Kontaktflächen 27, 28 schräg ausgebildet, sie können jedoch auch gerade ausgebildet sein, wie in der Figur 3 gezeigt, und z. B. mit abgeschrägten Kanten versehen sein.

Infolge der Pilzform wird der Ventilstößel 25 durch den in der zentralen Gaszuführung 15 herrschenden Druck fest auf den zugehörigen Ventilsitz 26 gepresst, ohne dass große Zuhaltekräfte erforderlich sind.

Die Figuren 4 und 5 zeigen Ventilstößel 25, die ebenfalls abgeschrägte oder gerade Kontaktflächen 27 und damit zusammenwirkende abgeschrägte bzw. gerade Kontaktflächen 28 an dem zugehörigen Ventilsitz 26 aufweisen. Außerdem ist an dem Ventilstößel 25 ein mittiger Zapfen 29 angeformt, der mit einer vorzugsweise abgerundeten Spitze versehen ist, jedoch auch beliebige andere Formen annehmen kann. Der Zapfen 29 greift in geschlossenem Zustand in die zentrale Gaszuführung 15 bzw. in das in der zentralen Gaszuführung 15 vorgesehene T-Stück ein und dient als Hitzeschild.

In der Figur 6 ist der erfindungsgemäße Ventilsitz 26 in einer vergrößerten Darstellung gezeigt. Der Ventilsitz 26 besteht aus einem Dichtring 30, der vorzugsweise aus einem elastischen Material, z. B. Teflon besteht. Da der Dichtring 30 allseitig gefasst ist, besteht jedoch auch die Möglichkeit, den Dichtring 30 aus einem plastischen Material herzustellen.

Der Dichtring 30 ist radial innen und außen von geschlossenen, umlaufenden, metallischen Dichtringteilen 31 eingefasst. Diese Dichtringteile 31 sind in Axialrichtung nur über einen Teil der Höhe des Dichtrings 30 geführt, so dass sie bei einer Belastung eine Verdrängerfunktion ausüben und eine Spaltextrusion verhindern können.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Vorrichtung zum thermischen Entgraten von Werkstücken mit einer verschließbaren Entgratungskammer, in welche die zu entgratenden Werkstücke einbringbar sind und die mit einer Prozessgasquelle verbindbar und mit einer Zündeinrichtung zum Zünden einer eingebrachten Prozessgasfüllung versehen ist, wobei das Prozessgas aus mehreren Komponenten besteht, die in einem Mischblock zusammengeführt werden, **dadurch gekennzeichnet, dass** in dem Mischblock (11) oder im Bereich der Entgratungskammer (1) ein Zentralventil (24) angeordnet ist, das die Zufuhr des Prozessgases zur Entgratungskammer (1) sperrt bzw. freigibt.

2. Vorrichtung nach Anspruch 1, **dadurch gekennzeichnet, dass** das Zentralventil (24) vorzugsweise über Hydraulikzylinder ansteuerbar ist.

3. Vorrichtung nach einem der vorhergehenden Ansprüche, **dadurch gekennzeichnet, dass** das Zentralventil (24) einen Ventilstößel (25) umfasst, der auf einen Ventilsitz (26) gepresst wird, der einen aus einem elastischen Material, z. B. Teflon, oder einem plastischen Material bestehenden Dichtring (30) aufweist.

4. Vorrichtung nach Anspruch 3, **dadurch gekennzeichnet, dass** der Ventilsitz (26) ebene oder schräge Kontaktflächen (27) und der Ventilstößel (25) entsprechende Kontaktflächen (28) aufweist.

5. Vorrichtung nach Anspruch 3 oder 4, **dadurch gekennzeichnet, dass** der Dichtring (30) wenigstens auf der vom Ventilstößel (25) beaufschlagten Seite radial innen und außen von geschlossenen, umlaufenden, metallischen Dichtringteilen (31) eingefasst ist.

6. Vorrichtung nach Anspruch 5, **dadurch gekennzeichnet, dass** sich die metallischen Dichtringteile (31) nur über einen Teil der Dichtringhöhe erstrecken.

7. Vorrichtung nach einem der vorhergehenden Ansprüche, **dadurch gekennzeichnet, dass** der Ventilstößel (25) pilzförmig ausgebildet ist.

8. Vorrichtung nach einem der vorhergehenden Ansprüche, **dadurch gekennzeichnet, dass** der Ventilstößel (25) einen mittig angeordneten zylindrischen Zapfen (29) aufweist, der vorzugsweise nach vorne abgerundet ist.

9. Vorrichtung nach einem der vorhergehenden Ansprüche, **dadurch gekennzeichnet, dass** der Mischblock (11) direkt an der Entgratungskammer (1) angeordnet ist.
